# EUROPÄISCHE PATENTSCHRIFT

(11) **EP 2 657 087 B1**
(45) Veröffentlichungstag und Bekanntmachung des Hinweises auf die Patenterteilung: **01.03.2017**
(21) Anmeldenummer: 13002028.2
(22) Anmeldetag: 17.04.2013
(51) Int. Cl.: H01Q 1/12, H01Q 1/32, H01Q 3/24, H01Q 21/28, H04B 5/00, H04M 1/04, B60R 11/02, B60R 11/00

(54) **Integrationseinrichtung und Verfahren zur Herstellung einer Wandung einer Aufnahmevorrichtung**
Integration device and method for producing a wall of a receiving device
Dispositif d'intégration et procédé de fabrication d'une paroi d'un dispositif de réception

(30) Priorität: 24.04.2012 DE 102012007922
(43) Veröffentlichungstag der Anmeldung: 30.10.2013
(73) Patentinhaber: Peiker acustic GmbH & Co. KG, 61381 Friedrichsdorf (DE)
(72) Erfinder: Lachnitt, Jens, 36304 Alsfeld (DE); Bürg, Ulrich, 63071 Offenbach (DE)
(74) Vertreter: Otten, Roth, Dobler & Partner mbB Patentanwälte

(56) Entgegenhaltungen:
- DE-A1-102007 044 294
- DE-A1-102010 027 620
- US-A1- 2005 007 067
- US-A1- 2008 165 066
- US-A1- 2010 289 341

## Beschreibung

Die Erfindung betrifft eine Integrationseinrichtung gemäß dem Oberbegriff des Anspruchs 1 und ein Verfahren zur Herstellung einer Wandung einer Aufnahmevorrichtung gemäß dem Oberbegriff des Anspruchs 10.

Aus der DE 10 2008 005 589 A1 ist eine Integrationseinrichtung für Mobiltelefone bekannt, welche mit wenigstens einer Antenne zum Senden und Empfangen auf Mobilfunkfrequenzen ausgestattet sind, wobei die Integrationseinrichtung einen Aufnahmeraum, eine dem Aufnahmeraum zugeordnete Koppelantenne für den Mobilfunk und eine Elektronik, welche mit einer Außenantenne verbindbar ist, umfasst. Eine derartige Integrationseinrichtung ist nur für einen bestimmten Typ eines Mobiltelefons geeignet.

Weiterhin ist aus der DE 10 2010 027 620 A1 eine Anordnung zur drahtlosen Ankopplung eines Funkgeräts bekannt, bei welcher bei beginnendem Betrieb des Funkgeräts über eine Kopplung, die mithilfe der Antennen auf der Platine stattfindet, der Multiplexschalter nacheinander alle Verbindungen zwischen dem Anschluss und den Anschlussleitungen schaltet. Für jeden dieser Schaltzustände detektiert der Detektor die entsprechende Signalqualität. Der Prozessor ermittelt den Schaltzustand mit der besten Signalqualität und steuert den Multiplex-Schalter so an, dass dieser während des weiteren Kopplungsbetriebs den Schaltzustand mit der ermittelten besten Signalqualität herstellt und aufrechterhält.

Aus der DE 10 2007 044 294 A1 ist ein Halter für ein mobiles Telefon mit einem Antennenarray bekannt. Hierbei weist der Halter eine Grundplatte auf, in welcher mindesten zwei Antennen angeordnet sind.

Aus der US 2010/0289341 A1 ist ein drahtloses Ladesystem bekannt, welches eine Vielzahl von Übertragungsantennen umfasst, wobei wenigstens eine dieser Übertragungsantennen derart ausgebildet ist, dass diese in einer gegenüber den anderen Übertragungsantennen unterschiedlichen Ebene orientiert ist und wobei jede Übertragungsantenne dieser Vielzahl von Übertragungsantennen dafür ausgebildet ist, in einem zugeordneten Nahfeld Leistung zu übertragen.

Es ist Aufgabe der Erfindung, eine Integrationseinrichtung vorzuschlagen, welche geeignet ist unterschiedliche Mobiltelefone optimal anzukoppeln. Weiterhin ist es Aufgabe der Erfindung, unterschiedliche Mobiltelefone sowohl induktiv zu laden als auch deren Mobilfunkantenne zu koppeln. Schließlich ist es Aufgabe der Erfindung ein Verfahren zur Herstellung einer Wandung und/oder eines Bodens einer Aufnahmevorrichtung vorzuschlagen.

Diese Aufgabe wird durch die Merkmale des Anspruchs 1 bzw. 9 gelöst. In den Unteransprüchen sind vorteilhafte und zweckmäßige Weiterbildungen angegeben.

Die erfindungsgemäße Integrationseinrichtung umfasst mehrere mit der Elektronik verbundene Koppelantennen, wobei diese Koppelantennen zur Kopplung der Elektronik mit wenigstens einer Antenne des Mobiltelefons geeignet sind und wobei eine Kopplung zur Kommunikation über das Mobilfunknetz derart erfolgt, dass die Elektronik der Integrationseinrichtung bei in den Aufnahmeraum eingelegtem und aktivem Mobiltelefon unabhängig von dem Typ des eingelegten Mobiltelefons und unabhängig von der Lage des eingelegten Mobiltelefons in dem Aufnahmeraum diejenige Koppelantenne für die Kommunikation auswählt und verwendet, welche in der Kommunikation mit dem in dem Aufnahmeraum befindlichen Mobiltelefon die höchste Empfangsqualität aufweist. Hierdurch ist es möglich, mit ein und derselben Integrationseinrichtung jedes Mobiltelefon in ein Fahrzeug zu integrieren, welches von seinen Abmessungen geeignet ist in dem Aufnahmeraum aufgenommen zu werden. Kern der Erfindung ist die ausgewählte Verwendung einer Koppelantenne aus einer Vielzahl von Koppelantennen, um unabhängig vom Typ und der Lage des Mobiltelefons eine optimale Kopplung zwischen dem Mobiltelefon und der Integrationseinrichtung zu erreichen. Eine derartige Integrationseinrichtung hat insbesondere den Vorteil, dass auch neue Typen von Mobiltelefonen oder Typen von Mobiltelefonen, welche bei der Entwicklung der Integrationseinrichtung nicht berücksichtigt wurden, optimal gekoppelt werden können, da die Integrationseinrichtung die zu verwendende Koppelantenne abhängig von der jeweiligen Situation auswählt und so immer das bestmögliche Kopplungsergebnis erreicht.

Die Erfindung sieht vor, die Integrationseinrichtung mit einer Aufnahmevorrichtung auszustatten, in welcher der Aufnahmeraum ausgebildet ist, wobei die Aufnahmevorrichtung einen Boden und eine Wandung umfasst, welche den Aufnahmeraum begrenzen, wobei die Wandung wenigstens zwei Seitenwände umfasst, wobei wenigstens eine Seitenwand der Wandung und/oder der Boden mehrere Koppelantennen umfasst und wobei der Aufnahmeraum derart bemessen ist, dass der Boden eine Fläche aufweist, welche derart bemessen ist, dass diese zur Ablage bzw. Anlage unterschiedlich großer Mobiltelefone geeignet ist. Bei einer derartige Gestaltung des Umfelds des Aufnahmeraums ist es möglich, die Integrationseinrichtung für eine Vielzahl von Typen von Mobiltelefonen auszubilden.

Gemäß der Erfindung ist es vorgesehen, in wenigstens zwei, insbesondere benachbarten Seitenwänden der Wandung jeweils mehrere Koppelantennen anzuordnen. Hierdurch wird die Wahrscheinlichkeit, für quasi jeden Typ eines Mobiltelefons eine geeignete Koppelantenne zur Verfügung zu haben, weiter erhöht.

Erfindungsgemäß wird durch eine Ausführung, bei welcher in allen Seitenwänden einer umlaufenden Wandung jeweils mehrere Koppelantennen angeordnet sind und bei der eine der Seitenwände insbesondere niedriger als die anderen Seitenwände ausgebildet ist, eine optimale Koppelumgebung geschaffen, wobei durch eine optionale Erniedrigung einer der Seitenwände eine Möglichkeit geschaffen wird, das Mobiltelefon parallel zum Boden einzuschieben und herauszunehmen, wie dies beispielsweise vorteilhaft sein kann, wenn die Aufnahmevorrichtung mit senkrechter oder schräger Ausrichtung des Bodens verbaut wird.

Weiterhin sieht die Erfindung vor, die Integrationseinrichtung mit wenigstens einer Ladespule und insbesondere mindestens zwei Ladespulen auszustatten, wobei die Ladespule bzw. die Ladespulen in den Boden der Aufnahmevorrichtung integriert sind und wobei eine Kontaktfläche des Bodens, mit welcher der Boden mit dem in den Aufnahmeraum eingelegten Mobiltelefon in Kontakt steht, eine Ladeebene bildet. Hierdurch ist auch die Energieversorgung des eingelegten Mobiltelefons gesichert, sofern dieses für eine induktive Ladung geeignet ist. Durch die erfindungsgemäße Anordnung der Koppelantennen in der Wandung wird im Boden der Aufnahmerichtung Platz für die Anordnung von Ladespulen geschaffen, so dass auch bei vergleichsweise kleinen Abmessungen der Aufnahmevorrichtung sowohl die Koppelantennen als auch die Ladespule bzw. die Ladespulen Platz finden, ohne sich gegenseitig zu stören.

Bezüglich der Anordnung der Koppelantennen ist es erfindungsgemäß vorgesehen, die Koppelantennen nur in einem oberen Abschnitt der Wandung anzuordnen, welcher oberhalb der Ladeebene liegt und direkt an den Aufnahmeraum angrenzt oder die Koppelantennen nur in einem unteren Abschnitt der Wandung angeordnet sind, welche einen Fortsatz des oberen Abschnitts bildet und unterhalb der Ladeebene verläuft oder dass sich die Koppelantennen jeweils durchgehend über einem oberen Abschnitt der Wandung, welcher oberhalb der Ladeebene liegt und direkt an den Aufnahmeraum angrenzt, und über einem unteren Abschnitt der Wandung, welcher einen Fortsatz des oberen Abschnitts bildet und unterhalb der Ladeebene verläuft, erstrecken oder dass sich ein erster Teil der Koppelantennen jeweils durchgehend über einem oberen Abschnitt der Wandung, welcher oberhalb der Ladeebene liegt und direkt an den Aufnahmeraum angrenzt, und über einem unteren Abschnitt der Wandung, welcher einen Fortsatz des oberen Abschnitts bildet und unterhalb der Ladeebene verläuft, erstreckt und dass ein zweiter Teil der Koppelantennen nur in einem unteren Abschnitt der Wandung angeordnet ist, welcher einen Fortsatz des oberen Abschnitts bildet und unterhalb der Ladeebene verläuft. Hierdurch ist es möglich, jeweils angepasst an die Bauform der Aufnahmevorrichtung, eine Vielzahl von Koppelantennen in für das Koppeln geeigneten Positionen anzuordnen.

Die Erfindung sieht auch vor, wenigstens einen Teil der Koppelantennen und insbesondere alle Koppelantennen in einem Winkel zwischen 70° und 130° und insbesondere senkrecht zu der Ladeebene anzuordnen. Hierdurch ist es möglich, dass sich die Koppelantennen oberhalb und unterhalb der Ladeebene erstrecken.

Erfindungsgemäß ist der Aufnahmeraum bzw. die den Aufnahmeraum bildende Aufnahmevorrichtung derart in eine Konsole eines Fahrzeugs integriert, dass dieser eine Schale bildet, bei welcher die Ladeebene etwa waagrecht im Raum liegt oder ist der Aufnahmeraum bzw, die den Aufnahmeraum bildende Aufnahmevorrichtung derart in eine Konsole eines Fahrzeugs integriert, dass dieser einen Schacht bildet, bei welchem die Ladeebene schräg oder senkrecht im Raum steht. Durch die Verwendbarkeit der erfindungsgemäßen Integrationseinrichtung für die Einbausituation liegender Einbau und stehender Einbau wird die Integrationseinrichtung den Anforderungen der Fahrzeugindustrie in optimaler Weise gerecht.

Schließlich sieht die Erfindung vor, die Koppelantenne als planare Koppelantenne auszubilden, welche entweder auf einer Innenseite der Wandung angeordnet ist oder in der Wandung angeordnet ist oder auf einer Außenseite der Wandung angeordnet ist. Durch eine derartige Ausbildung der Koppelantennen ist es möglich, die Wandung der Aufnahmevorrichtung selbst als Träger für die Koppelantennen zu verwenden und hierdurch die Integrationseinrichtung aus leichten und einfach recyclebaren Bauteilen aufzubauen.

Ein Verfahren zur Herstellung einer Wandung oder eines Bodens eines Aufnahmeraums einer Aufnahmevorrichtung für ein Mobiltelefon, welches insbesondere für eine Aufnahmevorrichtung einer Integrationseinrichtung für ein Mobiltelefon nach wenigstens einem der vorhergehenden Ansprüche vorgesehen ist, sieht vor, Koppelantennen und/oder Ladespulen derart auf die Wandung und/oder auf den Boden der Aufnahmevorrichtung aufzubringen, dass die Wandung und/oder der Boden hierzu im Bereich der vorgesehenen Koppelantennen und/oder Ladespulen mit einem Laser bearbeitet wird, wobei die Wandung und/oder der Boden aus einem für ein Laserstrukturierungsverfahren geeigneten Kunststoff besteht und in einem nachfolgenden Schritt eine chemische Metallisierung der bearbeiteten Bereiche durchgeführt und abschließend eine Oberflächenveredelung der Wandung und/oder des Bodens der Aufnahmevorrichtung durchgeführt wird. Durch ein derartiges Verfahren lässt sich eine Aufnahmevorrichtung umweltfreundlich herstellen, wobei gleichzeitig die Anforderungen an eine spezielle Formgebung leicht erfüllbar sind.

Erfindungsgemäß ist es insbesondere vorgesehen, die Laserbearbeitung an der Oberfläche der Aufnahmevorrichtung vorzunehmen, welche bei eingelegtem Mobiltelefon in Kontakt zu dem Mobiltelefon steht. Hierdurch weisen die Koppelantennen und/oder Ladespulen einen minimalen Abstand zu dem eingelegten Mobiltelefon auf.

Unter einem Mobiltelefon wird im Sinne der Erfindung jedes elektronische Handgerät verstanden, welches mit wenigstens einer Antenne zum Senden und Empfangen auf Mobilfunkfrequenzen ausgestattet ist.

Unter einer Ladespule wird im Sinne der Erfindung jede Antennenstruktur verstanden, welche geeignet ist elektrische Energie durch Induktion an ein mobiles Gerät zu übertragen.

Weitere Einzelheiten der Erfindung werden in der Zeichnung anhand von schematisch dargestellten Ausführungsbeispielen beschrieben.

Hierbei zeigt:
- Figur 1:: eine perspektivische Ansicht einer schematisch dargestellten Aufnahmevorrichtung einer erfindungsgemäßen Integrationseinrichtung;
- Figur 2:: eine Draufsicht auf eine erfindungsgemäße Integrationseinrichtung;
- Figur 3:: einen Schnitt durch eine Konsole eines Fahrzeugs, in welche die in der Figur 2 gezeigte Aufnahmevorrichtung der Integrationseinrichtung eingesetzt ist;
- Figur 4:: eine perspektivische Ansicht einer dritten Ausführungsvariante einer Aufnahmevorrichtung einer erfindungsgemäßen Integrationseinrichtung;
- Figur 5 bis 7:: schematische Draufsichten auf einen Eckbereich der in der Figur 4 gezeigten Aufnahmevorrichtung;
- Figur 8:: eine perspektivische Ansicht einer vierten Ausführungsvariante einer Aufnahmevorrichtung einer erfindungsgemäßen Integrationseinrichtung und
- Figur 9 und 10:: weitere Darstellungen der Figur 8 bei teilweise ausgeblendeten Koppelantennen.

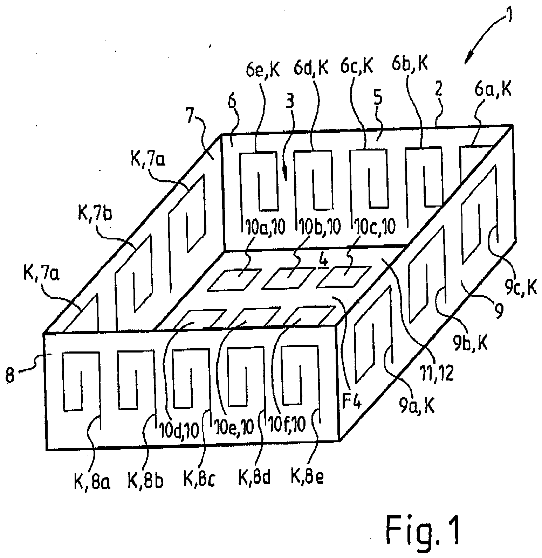

In der Figur 1 ist eine perspektivische Ansicht einer schematisch dargestellten Aufnahmevorrichtung 2 einer erfindungsgemäßen Integrationseinrichtung 1 gezeigt. Die Integrationseinrichtung 1 umfasst die Aufnahmevorrichtung 2, welche eine Aufnahmeraum 3 umgrenzt bzw. definiert. Der Aufnahmeraum 3, welcher zur Aufnahme eines nicht dargestellten Mobiltelefons aus einer Vielzahl unterschiedlicher Typen von Mobiltelefonen vorgesehen ist, wird durch einen Boden 4 und eine umlaufende Wandung 5 begrenzt. Hierbei umfasst die umlaufende Wandung 5 vier Seitenwände 6, 7, 8 und 9. Alle vier Seitenwände 6 bis 8 der Wandung 5 umfassen jeweils mehrere Koppelantennen K bzw. 6a bis 6e, 7a bis 7c, 8a bis 8e und 9a bis 9c. Diese Koppelantennen sind jeweils als planare Antennen ausgeführt. In den Boden 4 sind zwölf Ladespulen 10 integrier, von denen in der Figur 1 jedoch nur die sechse Ladespulen 10a bis 10f sichtbar sind. Eine Kontaktfläche 11 des Bodens 4 bildet eine Ladeebene 12, auf welcher ein Mobiltelefon vorzugsweise mit seiner Rückseite ablegbar ist. Der Boden 4 weist eine Fläche F4 auf, welche derart bemessen ist, dass diese zur Ablage unterschiedlich großer Mobiltelefone geeignet ist. Gemäß einer erfindungsgemäßen Variante zu dem in der Figur 1 gezeigten Ausführungsbeispiel umfasst die Wandung die Ladespulen und umfasst der Boden die Koppelantennen.

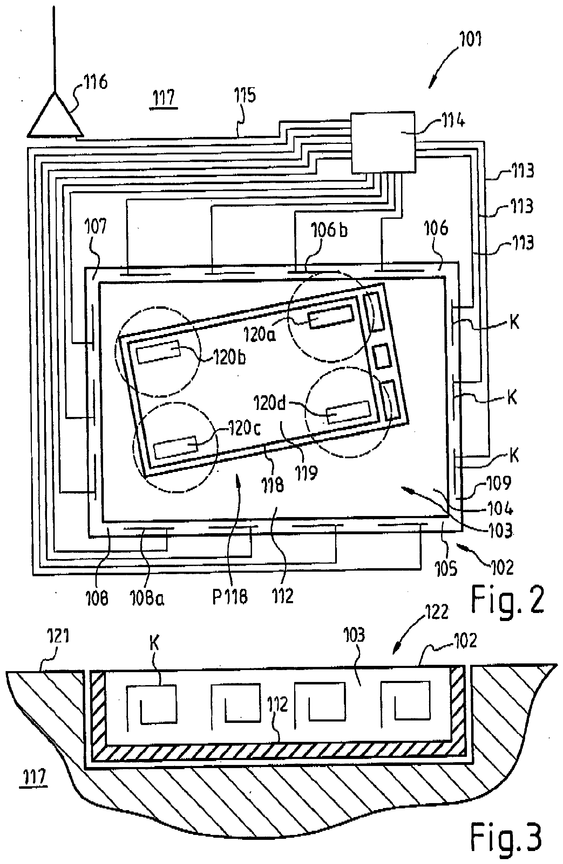

In der Figur 2 ist eine Draufsicht auf eine Ausführungsvariante einer erfindungsgemäßen Integrationseinrichtung 101 gezeigt. Zur Vereinfachung wurde auf eine Darstellung von Ladespulen in einem Boden 104 einer Aufnahmevorrichtung 102 der Integrationseinheit 101 verzichtet. In jeder Seitenwand 106 bis 109 einer umlaufenden Wandung 105, welche einen Aufnahmeraum 103 umgrenzt, sind jeweils mehrere Koppelantennen K angeordnet. Die Koppelantennen K sind über Antennekabel 113 mit einer Elektronik 114 der Integrationseinrichtung 101 verbunden, wobei zur Erhaltung der Übersichtlichkeit in der Figur 2 nur ein Teil der Koppelantennen mit "K" und ein Teil der Antennenkabel mit "113" bezeichnet ist. An die Elektronik 114 der Integrationseinrichtung 101 ist über ein weiteres Antennenkabel 115 eine Außenantenne 116 eines Fahrzeugs 117 angeschlossen. Auf einer Ladeebene 112 liegt in dem Aufnahmeraum 103 ein Mobiltelefon 118. Das Mobiltelefon 118 ist mit einer seinem Display 119 gegenüber liegenden Rückseite auf dem Boden 104 in einer zufälligen Position P118 innerhalb des durch die Wandung 105 umgrenzten Aufnahmeraums 103 abgelegt. Das Mobiltelefon 118 umfasst in einer ersten Variante vier Antennen 120a bis 120d, welche für das Senden und Empfangen auf Mobilfunkfrequenzen geeignet sind. Gemäß einer zweiten Variante umfasst das Mobiltelefon 118 nur die Antenne 120c als für das Senden und Empfangen auf Mobilfunkfrequenzen geeignete Antenne.

Im Fall der ersten Variante erfolgt eine Kopplung der Antenne 120a des Mobiltelefons 118 mit der Koppelantenne 106b der Integrationseinrichtung 101, da die Antenne 120a am nächsten an einer der Koppelantennen K liegt und somit bei dieser Antennenpaarung eine hohe Signalstärke gegeben ist.

Im Fall der zweiten Variante erfolgt abhängig von den von der Elektronik 114 ermittelten Werten zum Beispiel eine Kopplung der Antenne 120c des Mobiltelefons 118 mit der Koppelantenne 108a der Integrationseinrichtung 101.

In der Figur 3 ist ein Schnitt durch eine Konsole 121 des Fahrzeugs 117 gezeigt, in welche die in der Figur 2 gezeigte Aufnahmevorrichtung 102 der Integrationseinrichtung 101 eingesetzt ist. Der Aufnahmeraum 103 ist bei der gezeigten Einbausituation so angeordnet, dass seine Ladeebene 112 waagrecht im Raum liegt. Somit bildet die Aufnahmevorrichtung 102 eine Schale 122 für das hier nicht gezeigte Mobiltelefon.

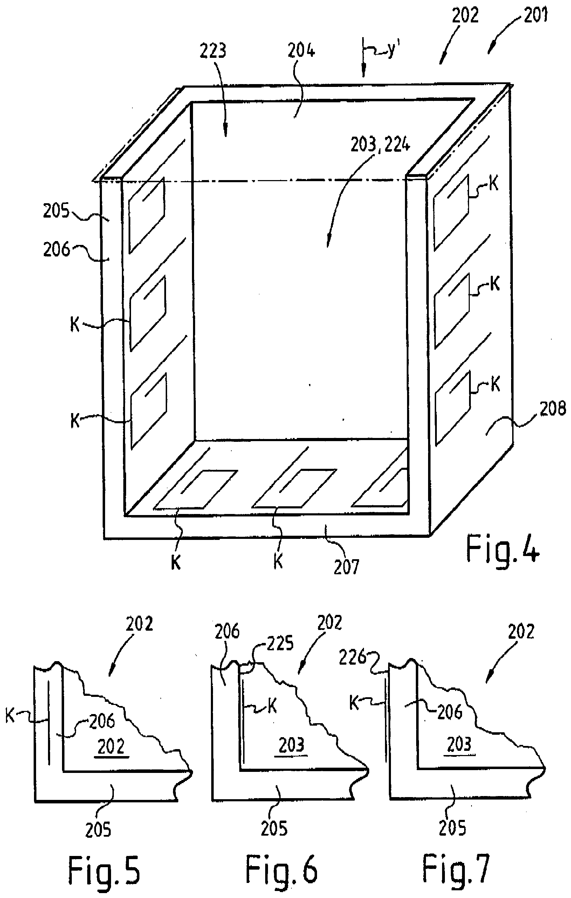

In der Figur 4 ist eine perspektivische Ansicht einer dritten Ausführungsvariante einer Aufnahmevorrichtung 202 einer erfindungsgemäßen Integrationseinrichtung 201 gezeigt. Im Unterschied zu den vorhergehend gezeigten Ausführungsvarianten ist bei der Aufnahmevorrichtung 202 ein Boden 204 senkrecht im Raum ausgerichtet, da die Aufnahmevorrichtung 202 für einen stehenden Einbau in eine nicht dargestellte Konsole vorgesehen ist. Aus diesem Grund umfasst eine Wandung 205 auch nur drei aneinandergrenzende Seitenwände 206, 207 und 208. Durch eine Öffnung 223, welche durch die fehlende vierte Seitenwand freigegeben wird, ist es möglich ein nicht dargestelltes Mobiltelefon in eine Pfeilrichtung y' in einen Aufnahmeraum 203 einzuschieben, wenn die Aufnahmevorrichtung 202 in eine Konsole eines Fahrzeug integriert ist, wie dies mit gestrichelten Linien angedeutet ist. Bei einer derartigen, senkrechten Ausrichtung des Bodens 204 bildet der Aufnahmeraum 203 einen Schacht 224 für das Mobiltelefon. Erfindungsgemäß ist es bei einer derartigen Einbausituation auch vorgesehen, dem Boden 204 gegenüberliegend einen Deckel anzuordnen, so dass ein durch die Öffnung 223 zugänglicher Köcher gebildet ist. In der Figur 4 sind schematisch Koppelantennen K angedeutet, welche den drei Seitenwänden 206, 207 und 208 zugeordnet sind, wobei jede Seitenwand drei Koppelantennen aufweist. Die Koppelantennen der dritten Ausführungsvariante sind genauso wie die Koppelantennen der ersten Ausführungsvariante wie in der zweiten Ausführungsvariante gezeigt und beschrieben, mit einer Elektronik der Integrationseinrichtung verbunden, welche wiederum an eine Außenantenne angeschlossen ist.

Durch schematische Draufsichten auf einen Eckbereich der in der Figur 4 gezeigten Aufnahmevorrichtung 202 ist in den Figuren 5 bis 7 gezeigt, dass die Koppelantenne K gemäß einer ersten Ausführungsvariante in die Wandung 205 bzw. in die Seitenwand 206 integriert ist (siehe Figur 5). Durch eine derartige Anordnung sind die Koppelantennen K besonders gut vor Beschädigungen geschützt. Gemäß einer in der Figur 6 gezeigten zweiten Ausführungsvariante ist dargestellt, dass die Koppelantenne K auf einer Innenseite 225 angeordnet ist. Hierdurch wird eine maximale Nähe der Koppelantennen K zu einem in dem Aufnahmeraum 203 liegenden Mobiltelefon erreicht. Gemäß einer in der Figur 7 gezeigten dritten Ausführungsvariante ist dargestellt, dass die Koppelantenne K auf einer Außenseite 226 angeordnet ist. Durch diese Anordnung werden die Koppelantennen K ebenfalls gut vor Umwelteinflüssen geschützt.

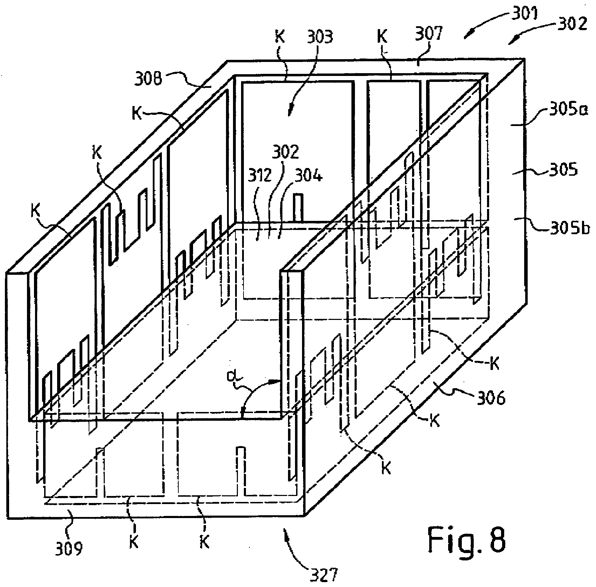

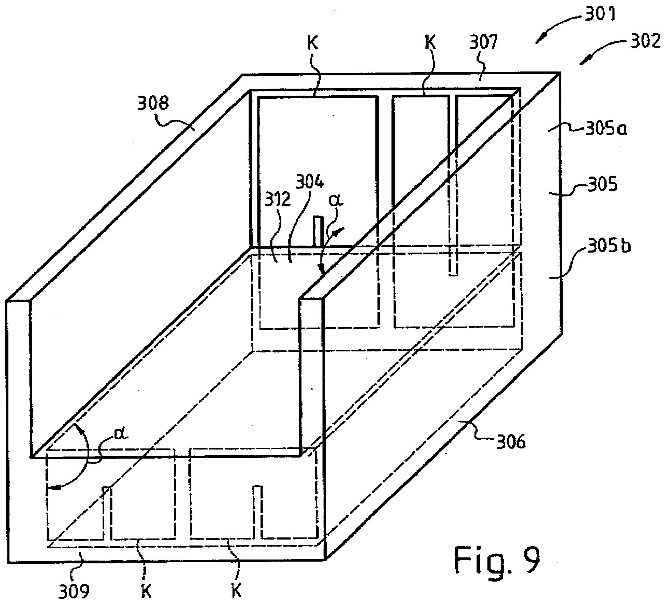

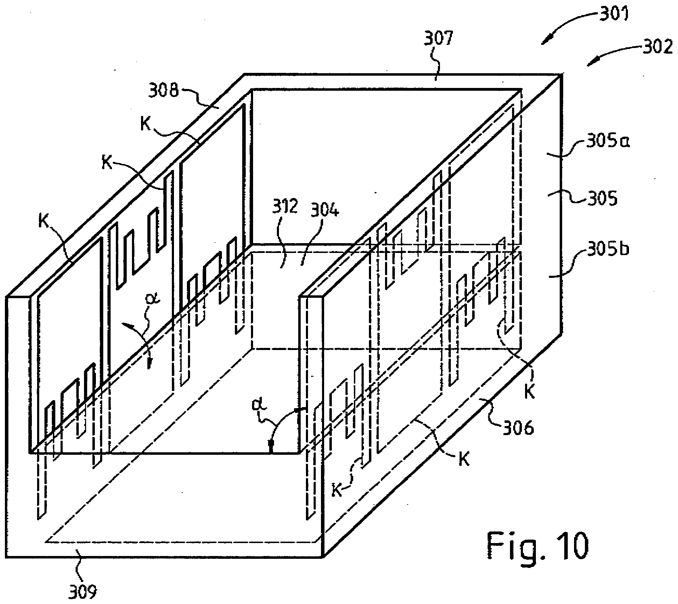

In der Figur 8 ist eine perspektivische Ansicht einer vierten Ausführungsvariante einer Aufnahmevorrichtung 302 einer Integrationseinrichtung 301 gezeigt. Ein Aufnahmeraum 303 der Aufnahmevorrichtung 302 wird durch einen Boden 304 und eine Wandung 305 begrenzt. Die Wandung 305 umfasst vier Seitenwänden 306 bis 309, wobei die Seitenwand 309 niedriger als die anderen Seitenwände 306 bis 308 ausgebildet ist. Alle Seitenwände 306 bis 309 umfassen jeweils mehrere Koppelantennen K. In der Figur 8 sind mit gestrichelten Linien auch verdeckte Kanten gezeigt, somit ist erkennbar, dass sich die Koppelantennen K der Seitenwände 306 bis 308 jeweils durchgehend über einen oberen Abschnitt 305a der Wandung 305 und einen unteren Abschnitt 305b der Wandung 305 erstrecken. Hierbei liegt der oberen Abschnitt 305a der Wandung 305 oberhalb einer Ladeebene 312 und der untere Abschnitt 305b der Wandung 305 liegt unterhalb einer Ladeebene 312. Der oberen Abschnitt 305a der Wandung 305 grenzt direkt an den Aufnahmeraum 303 an. Im Bereich der Seitenwand 309 ist die Wandung 305 derart ausgeführt, dass diese nur einen unteren Bereich 305b aufweist und sich deren Koppelantennen K nur über diesen Bereich 305b erstrecken. Somit erstreckt sich ein erster Teil bzw. eine erste Teilmenge der Koppelantennen K, nämlich die Koppelantennen K der Seitenwände 306 bis 308 durchgehend von einem oberen Abschnitt 305a bis in einen unteren Abschnitt 305b der Wandung 305. Ein zweiter Teil bzw. eine zweite Teilmenge der Koppelantennen K, nämlich die Koppelantennen K der Seitenwand 309 erstrecken sich nur über einen unteren Abschnitt 305b der Wandung 305. Die Koppelantennen stehen zu dem Boden 304 bzw. zu der Ladeebene 312 jeweils in einem Winkel α - 90°. Unter dem Boden 304 ist ein Hohlraum 327 ausgebildet, in welchem sich die von einer der Koppelantennen K ausgesandten und empfangenen Welle durch den Boden 304 von und zu dem nicht dargestellten Mobiltelefon, welches auf dem Boden 304 aufliegt, ausbreiten können. Zur Erleichterung des Überblicks ist die in der Figur 8 gezeigte Aufnahmevorrichtung 302 in der Figur 9 nochmals dargestellt, wobei die Koppelantennen K der Seitenwände 306 und 308 ausgeblendet sind. Zur weiteren Erleichterung des Überblicks ist die in der Figur 8 gezeigte Aufnahmevorrichtung 302 in der Figur 10 nochmals dargestellt, wobei die Koppelantennen K der Seitenwände 307 und 309 ausgeblendet sind. Aus der Figur 8 bzw. den Figuren 9 und 10 ist weiterhin ersichtlich, dass die Koppelantennen K einer Seitenwand 306 bzw. 307 bzw. 308 bzw. 309 abwechselnd zueinander um 180° verdreht sind. Hierdurch werden die Koppeleigenschaften der Integrationseinrichtung 301 in Bezug auf die Ankopplung von Mobiltelefonen weiter verbessert, so dass die Integrationseinrichtung 301 geeignet ist, unabhängig von der Lage und dem Typ des eingelegten Mobiltelefons über eine ihrer Koppelantennen K eine brauchbare Kopplung herzustellen und so dass Mobiltelefon erfolgreich über die an ihre Elektronik angeschlossene Außenantenne zu betreiben.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Integrationseinrichtung
- 2: Aufnahmevorrichtung
- 3: Aufnahmeraum
- 4: Boden
- 5: Wandung
- 6 - 9: Seitenwand
- 6a - 6e: Koppelantenne
- 7a - 7c: Koppelantenne
- 8a - 8e: Koppelantenne
- 9a - 9c: Koppelantenne
- 10: Ladespule
- 10a 10f: Ladespule
- 11: Kontaktfläche
- 12: Ladeebene
- 101: Integrationseinrichtung
- 102: Aufnahmevorrichtung
- 103: Aufnahmeraum
- 104: Boden
- 105: Wandung
- 106 - 109: Seitenwand
- 106b: Koppelantenne
- 108a: Koppelantenne
- 112: Ladeebene
- 113: Antennekabel zwischen K und 114
- 114: Elektronik
- 115: Antennenkabel zwischen 115 und 116
- 116: Außenantenne
- 117: Fahrzeug
- 118: Mobiltelefon
- 119: Display von 118
- 120a - 120d: Antenne von 118
- 121: Konsole von 117
- 122: Schale für 118
- 201: Integrationseinrichtung
- 202: Aufnahmevorrichtung
- 203: Aufnahmeraum
- 204: Boden
- 205: Wandung
- 206 - 208: Seitenwand
- 223: Öffnung von 202
- 224: Schacht
- 225: Innenseite von 205 bzw. 206
- 226: Außenseite von 205 bzw. 206

- 301: Integrationseinrichtung 301
- 302: Aufnahmevorrichtung 302
- 303: Aufnahmeraum 303
- 304: Boden 304
- 305: Wandung 305
- 305a: oberen Abschnitt 305a
- 305b: unteren Abschnitt 305b
- 306 - 309: Seitenwänden 306 bis 309
- 312: Ladeebene 312
- 327: Hohlraum 327

- α: Winkel zwischen K und 312
- y': Pfeilrichtung y'
- F4: Fläche von 4
- K: Koppelantennen K
- P119: Position P118

## Patentansprüche

1. Integrationseinrichtung (1; 101; 201; 301) zur Einbindung eines Mobiltelefons (118) in ein Fahrzeug (117),
- wobei die Integrationseinrichtung (1; 101; 201; 301) eine Aufnahmevorrichtung (2; 102; 202; 302) umfasst, in welcher ein Aufnahmeraum (3; 103; 203; 303) ausgebildet ist, wobei die Aufnahmevorrichtung (2; 102; 202; 302) einen Boden (4; 104; 204; 304) und eine Wandung (5; 105; 205; 305) umfasst, welche den Aufnahmeraum (3; 103; 203; 303) begrenzen,
- wobei die Integrationseinrichtung (1; 101; 201; 301) mehrere dem Aufnahmeraum (3; 103; 203; 303) zugeordneten Koppelantenne (K) für den Mobilfunk, und eine Elektronik (114), welche mit einer Außenantenne (116) verbunden ist, umfasst,
- wobei die Integrationseinrichtung (1; 101; 201; 301) wenigstens eine Ladespule (10; 10a - 10f) umfasst, wobei die Ladespule (10; 10a - 10f) bzw. die Ladespulen (10; 10a - 10f) in den Boden (4; 104; 204; 304) der Aufnahmevorrichtung (2; 102; 202; 302) integriert sind
und
- wobei die Koppelantennen (K) mit der Elektronik (114) verbunden sind,
- wobei diese Koppelantennen (K) zur Kopplung der Elektronik (114) mit wenigstens einer Antenne (120a - 120d) des Mobiltelefons (118) geeignet sind,
- wobei die Integrationseinrichtung (1; 101; 201; 301) zur Kommunikation über das Mobilfunknetz so angepasst ist, dass die Elektronik (114) der Integrationseinrichtung (1; 101; 201; 301) bei in den Aufnahmeraum (3; 103; 203; 303) eingelegtem und aktivem Mobiltelefon (118) unabhängig von dem Typ des eingelegten Mobiltelefons (118) und unabhängig von der Lage des eingelegten Mobiltelefons (118) in dem Aufnahmeraum (3; 103; 203; 303) diejenige Koppelantenne (K) für die Kommunikation auswählt und verwendet, welche in der Kommunikation mit dem in dem Aufnahmeraum (3; 103; 203; 303) befindlichen Mobiltelefon (118) die höchste Empfangsqualität aufweist und
- wobei der Boden (4; 104; 204; 304) eine Fläche (F4) aufweist, welche derart bemessen ist, dass diese zur Ablage bzw. Anlage unterschiedlich großer Mobiltelefone (118) geeignet ist, wobei die Wandung (5; 105; 205; 305) wenigstens zwei Seitenwände (6 - 9; 106 - 109; 206 - 208; 306 - 309) umfasst, wobei wenigstens eine Seitenwand der Wandung (5; 105; 205; 305) mehrere Koppelantennen (K) der Koppelantennen (K) umfasst.

2. Integrationseinrichtung (1; 101; 201; 301) nach Anspruch 1, **dadurch gekennzeichnet, dass** in wenigstens zwei Seitenwänden (6 - 9; 106 - 109; 206 - 208; 306 - 309) der Wandung (5; 105; 205; 305) jeweils mehrere Koppelantennen (K) der Koppelantennen (K) angeordnet sind.

3. Integrationseinrichtung (1; 101; 201; 301) nach Anspruch 1 oder 2, **dadurch gekennzeichnet, dass** in allen Seitenwänden (6 - 9; 106 - 109; 206 - 208; 306 - 309) einer umlaufenden Wandung (5; 105; 205; 305) jeweils mehrere Koppelantennen (K) der Koppelantennen (K) angeordnet sind, wobei eine der Seitenwände (6 - 9; 106 - 109; 206 - 208; 306 - 309) niedriger als die anderen Seitenwände (6 - 9; 106 - 109; 206 - 208; 306 - 309) ausgebildet ist.

4. Integrationseinrichtung (1; 101; 201; 301) nach einem der vorhergehenden Ansprüche, **dadurch gekennzeichnet, dass** der Boden (4; 104; 204; 304) eine Kontaktfläche umfasst, die angepasst ist, bei in den Aufnahmeraum (3; 103; 203; 303) eingelegtem Mobiltelefon (118) mit dem Mobiltelefon (118) in Kontakt zu stehen,
wobei die Kontaktfläche eine Ladeebene (12, 112, 312) bildet.

5. Integrationseinrichtung (1; 101; 201; 301) nach Anspruch 4, **dadurch gekennzeichnet,**
- **dass** die Koppelantennen (K) nur in einem oberen Abschnitt (305a) der Wandung (5; 105; 205; 305) angeordnet sind, welcher oberhalb der Ladeebene (12, 112, 312) liegt und direkt an den Aufnahmeraum (3; 103; 203; 303) angrenzt oder
- **dass** die Koppelantennen (K) nur in einem unteren Abschnitt (305b) der Wandung (5; 105; 205; 305) angeordnet sind, welche einen Fortsatz des oberen Abschnitts bildet und unterhalb der Ladeebene (12, 112, 312) verläuft oder
- **dass** sich die Koppelantennen (K) jeweils durchgehend über einem oberen Abschnitt (305a) der Wandung (5; 105; 205; 305), welcher oberhalb der Ladeebene (12, 112, 312) liegt und direkt an den Aufnahmeraum (3; 103; 203; 303) angrenzt, und über einem unteren Abschnitt (305b) der Wandung (5; 105; 205; 305), welcher einen Fortsatz des oberen Abschnitts (305a) bildet und unterhalb der Ladeebene (12, 112, 312) verläuft, erstrecken oder
- **dass** sich ein erster Teil der Koppelantennen (K) jeweils durchgehend über einem oberen Abschnitt (305a) der Wandung (5; 105; 205; 305), welcher oberhalb der Ladeebene (12, 112, 312) liegt und direkt an den Aufnahmeraum (3; 103; 203; 303) angrenzt, und über einem unteren Abschnitt (305b) der Wandung (5; 105; 205; 305), welcher einen Fortsatz des oberen Abschnitts (305a) bildet und unterhalb der Ladeebene (12, 112, 312) verläuft, erstreckt und dass ein zweiter Teil der Koppelantennen (K) nur in einem unteren Abschnitt (305b) der Wandung (5; 105; 205; 305) angeordnet ist, welcher einen Fortsatz des oberen Abschnitts (305a) bildet und unterhalb der Ladeebene (12, 112, 312) verläuft.

6. Integrationseinrichtung (1; 101; 201; 301) nach einem der vorhergehenden Ansprüche 4 oder 5, **dadurch gekennzeichnet, dass** wenigstens ein Teil der Koppelantennen (K) in einem Winkel (α) zwischen 70° und 130° zu der Ladeebene (12, 112, 312) stehen.

7. Integrationseinrichtung (1; 101; 201; 301) nach einem der vorhergehenden Ansprüche 4, 5 oder 6 und Konsole (121) eines Fahrzeugs (117), **dadurch gekennzeichnet, dass** der Aufnahmeraum (3; 103; 203; 303) bzw. die den Aufnahmeraum (3; 103; 203; 303) bildende Aufnahmevorrichtung (2; 102; 202; 302) derart in die Konsole (121) des Fahrzeugs (117) integriert ist, dass dieser eine Schale (122) bildet, bei welcher die Ladeebene (12, 112, 312) etwa waagrecht im Raum liegt oder dass der Aufnahmeraum (3; 103; 203; 303) bzw. die den Aufnahmeraum (3; 103; 203; 303) bildende Aufnahmevorrichtung (2; 102; 202; 302) derart in die Konsole (121) des Fahrzeugs (117) integriert ist, dass dieser einen Schacht (224) bildet, bei welchem die Ladeebene (12, 112, 312) schräg oder senkrecht im Raum steht.

8. Integrationseinrichtung (1; 101; 201; 301) nach einem der vorhergehenden Ansprüche, **dadurch gekennzeichnet, dass** die Koppelantenne (K) als planare Koppelantenne (K) ausgebildet sind, welche entweder auf einer Innenseite (225) der Wandung (5; 105; 205; 305) angeordnet sind oder in der Wandung (5; 105; 205; 305) angeordnet sind oder auf einer Außenseite (226) der Wandung (5; 105; 205; 305) angeordnet sind.

9. Verfahren zur Herstellung einer Integrationseinrichtung (1; 101; 201; 301) für ein Mobiltelefon (118) nach wenigstens einem der vorhergehenden Ansprüche, wobei die Koppelantennen (K) derart auf die Wandung (5; 105; 205; 305) und/oder Ladespulen (10; 10a - 10f) derart auf den Boden (4; 104; 204; 304) der Aufnahmevorrichtung (2; 102; 202; 302) aufgebracht werden, dass die Wandung (5; 105; 205; 305) und/oder der Boden (4; 104; 204; 304) hierzu im Bereich der vorgesehenen Koppelantennen (K) und/oder im Bereich der vorgesehenen Ladespulen (10; 10a - 10f) mit einem Laser bearbeitet wird,
wobei die Wandung (5; 105; 205; 305) und/oder der Boden (4; 104; 204; 304) aus einem für ein Laserstrukturierungsverfahren geeigneten Kunststoff besteht und dass in einem nachfolgenden Schritt eine chemische Metallisierung der bearbeiteten Bereiche durchgeführt wird und abschließend eine Oberflächenveredelung der Wandung (5; 105; 205; 305) und/oder des Bodens (4; 104; 204; 304) der Aufnahmevorrichtung (2; 102; 202; 302), insbesondere durch Beflocken, durchgeführt wird.

## Claims

1. Integration device (1; 101; 201; 301) for integrating a mobile telephone (118) into a vehicle (117),
- wherein the integration device (1; 101; 201; 301) comprises a receiving device (2; 102; 202; 302), in which a receiving space (3; 103; 203; 303) is formed, wherein the receiving device (2; 102; 202; 302) comprises a base (4; 104; 204; 304) and a wall (5; 105; 205; 305) which delimit the receiving space (3; 103; 203; 303),
- wherein the integration device (1; 101; 201; 301) comprises a plurality of coupling antennas (K) assigned to the receiving space (3; 103; 203; 303) for the mobile radio and electronics (114) connected to an external antenna (116),
- wherein the integration device (1; 101; 201; 301) comprises at least one charging coil (10; 10a - 10f), wherein the charging coil(s) (10; 10a - 10f) is/are respectively integrated into the base (4; 104; 204; 304) of the receiving device (2; 102; 202; 302), and
- wherein the coupling antennas (K) are connected to the electronics (114),
- wherein these coupling antennas (K) are suitable for coupling the electronics (114) to at least one antenna (120a - 120d) of the mobile telephone (118),
- wherein the integration device (1; 101; 201; 301) is so adapted for communication via the mobile radio network that the electronics (114) of the integration device (1; 101; 201; 301) selects and uses that coupling antenna (K) which offers the highest reception quality for communication with the mobile telephone (118) located in the receiving space (3; 103; 203; 303) for the communication of the inserted and active mobile telephone (118) in the receiving space (3; 103; 203; 303), regardless of the type of the inserted mobile telephone (118) and regardless of the position of the inserted mobile telephone (118) in the receiving space (3; 103; 203; 303), and
- wherein the base (4; 104; 204; 304) has a surface (F4) which is so dimensioned that it is suitable for holding or installing differently sized mobile phones (118),
- wherein the wall (5; 105; 205; 305) comprises at least two side walls (6; 9; 106 - 129; 206 - 208; 306 - 309), wherein at least one side wall of the side walls (5; 105; 205; 305) comprises a plurality of coupling antennas (K) of the coupling antennas (K).

2. Integration device (1; 101; 201; 301) according to claim 1,
**characterized in that**
a plurality of coupling antennas (K) of the coupling antennas (K) is arranged in at least two side walls (6; 9; 106 - 129; 206 - 208; 306 - 309) of the walls (5; 105; 205; 305).

3. Integration device (1; 101; 201; 301) according to claim 1 or 2,
**characterized in that**
a plurality of coupling antennas (K) of the coupling antennas (K) is respectively arranged in all the side walls (6; 9; 106 - 129; 206 - 208; 306 - 309) of a circumferential wall (5; 105; 205; 305), wherein one of the side walls (6 - 9; 106 - 109; 206 - 208; 306 - 309) is designed to be lower than the other side walls (6 - 9; 106 - 109; 206 - 208; 306 - 309).

4. Integration device (1; 101; 201; 301) according to one of the preceding claims,
**characterized in that**
the base (4; 104; 204; 304) comprises a contact surface which is adapted to be in contact with the mobile telephone (118) when the mobile telephone (118) is inserted into the receiving space (3; 103; 203; 303), wherein the contact surface forms a charging plane (12, 112, 312).

5. Integration device (1; 101; 201; 301) according to claim 4,
**characterized in that**
- the coupling antennas (K) are arranged only in an upper section (305a) of the wall (5; 105; 205; 305), which lies above the charging plane (12, 112, 312) and directly adjoins the receiving space (3; 103; 203, 303),
- the coupling antennas (K) are arranged only in a lower section (305b) of the wall (5; 105; 205; 305), which forms an extension of the upper section and extends under the charging plane (12, 112, 312), or
- the coupling antennas (K) each extend via an upper section (305a) of the wall (5; 105; 205; 305), which lies above the charging plane (12, 112, 312) and directly adjoins the receiving space (3; 103; 203; 303), and via a lower section (305b) of the wall (5; 105; 205; 305) which forms an extension of the upper portion (305a) and extends below the charging plane (12, 112, 312), or
- a first part of the coupling antennas (K) extends via an upper section (305a) of the wall (5; 105; 205; 305) which lies above the charging plane (12, 112, 312) and directly adjoins the receiving space (3; 103; 203; 303), and via a lower section of the wall (5; 105; 205; 305), which forms an extension of the upper section (305a) and extends under the charging plane (12, 112, 312), while a second part of the coupling antennas (K) is arranged only in a lower section (305b) of the wall (5; 105; 205; 305) and forms an extension of the upper section (305a) and extends below the charging plane (12, 112, 312).

6. Integration device (1; 101; 201; 301) according to one of the preceding claims 4 or 5,
**characterized in that**
at least a part of the coupling antennas (K) is arranged at an angle (α) between 70° and 130° to the charging plane (12, 112, 312).

7. Integration device (1; 101; 201; 301) according to one of the preceding claims 4, 5 or 6 and console (121) of a vehicle (117),
**characterized in that**
the receiving space (3;103;203;303 respectively the receiving device (2; 102; 202; 302) forming the receiving space (3; 103; 203; 303) is so integrated into the console (121) of the vehicle (117) that it forms a shell (122), wherein the charging plane (12, 112, 312) lies approximately horizontally in the space, or wherein the receiving space 3; 103; 203; 303) respectively the receiving device (2; 102; 202; 302) forming the receiving space (3; 103; 203; 303) is so integrated into the console (121) of the vehicle (117) that it forms a shaft (224), wherein the charging plane (12, 112, 312) is inclined or vertical in the space.

8. Integration device (1; 101; 201; 301) according to one of the preceding claims,
**characterized in that**
the coupling antennas (K) are designed as planar coupling antennas (K) which are arranged either on an inner side (225) of the wall (5; 105; 205; 305), or are arranged in the wall (5; 105; 205; 305), or are arranged on an outer side (226) of the wall (5; 105; 205; 305).

9. Method for producing an integration device (1; 101; 201; 301) for a mobile telephone (118) according to at least one of the preceding claims, wherein the coupling antennas (K) are so applied to the wall (5; 105; 205; 305) and/or the charging coils (10; 10a -10f) are so applied to the base (4; 104; 204; 304) of the receiving device (2; 102; 202; 302), that the wall (5; 105; 205; 305) and/or the base (4; 104; 204; 304) is processed with a laser in the region of the provided coupling antennas (K) and/or in the region of the provided charging coils (10; 10a - 10f), wherein the wall (5; 105; 205; 305) and/or the base (4; 104; 204; 304) comprises a plastic that is suitable for a laser structuring method, and wherein chemical metallization of the processed regions is carried out in a subsequent step, and finally wherein surface finishing of the wall (5; 105; 305; 305) and/or of the base (4; 104; 204; 304) of the receiving device (2; 102; 202; 302) is performed, in particular through flocking.

## Revendications

1. Dispositif d'intégration (1 ; 101 ; 201 ; 301) pour l'intégration d'un téléphone mobile (118) dans un véhicule (117),
- le dispositif d'intégration (1 ; 101 ; 201 ; 301) comprenant un dispositif de logement (2 ; 102; 202; 302), dans lequel est réalisé un espace de logement (3 ; 103 ; 203 ; 303), le dispositif de logement (2 ; 102 ; 202 ; 302) comprenant un fond (4 ; 104 ; 204 ; 304) et des parois (5 ; 105 ; 205 ; 305) qui délimitent l'espace de logement (3 ; 103 ; 203 ; 303),
- le dispositif d'intégration (1 ; 101 ; 201 ; 301) comprenant plusieurs antennes de couplage (K) correspondant à l'espace de logement (3 ; 103 ; 203 ; 303) pour la téléphonie mobile et une électronique (114), qui est connectée à une antenne externe (116),
- le dispositif d'intégration (1 ; 101 ; 201 ; 301) comprenant au moins une bobine de charge (10 ; 10a - 10f), la bobine de charge (10 ; 10a - 10f) ou les bobines de charge (10 ; 10a - 10f) étant intégrées dans le fond (4 ; 104 ; 204 ; 304) du dispositif de logement (2 ; 102 ; 202 ; 302) et
- les antennes de couplage (K) étant connectées à l'électronique (114),
- ces antennes de couplage (K) étant conçue pour le couplage de l'électronique (114) avec au moins une antenne (120a - 120d) du téléphone mobile (118),
- le dispositif d'intégration (1 ; 101 ; 201 ; 301) étant adapté à une communication par le réseau de téléphonie mobile, de façon à ce que l'électronique (114) du dispositif d'intégration (1 ; 101 ; 201 ; 301), lorsque le téléphone mobile (118) est inséré dans l'espace de logement (3 ; 103 ; 203 ; 303) et est actif, indépendamment du type de téléphone mobile (118) inséré et indépendamment de la position du téléphone mobile (118) inséré dans l'espace de logement (3 ; 103 ; 203 ; 303), sélectionne et utilise pour la communication l'antenne de couplage (K) qui présente, dans la communication avec le téléphone mobile (118) se trouvant dans l'espace de logement (3 ; 103 ; 203 ; 303), présente la qualité de réception la plus élevée et
- le fond (4; 104; 204; 304) présentant une surface (F4) qui est dimensionnée de façon à ce que celle-ci soit adaptée à la pose ou à l'appui de téléphone mobiles (118) de tailles différentes,
les parois (5 ; 105 ; 205 ; 305) comprenant au moins deux parois latérales (6 - 9 ; 106 - 109 ; 206 - 208 ; 306 - 309), au moins une paroi latérale des parois (5 ; 105 ; 205 ; 305) comprenant plusieurs antennes de couplage (K) des antennes de couplage (K).

2. Dispositif d'intégration (1 ; 101 ; 201 ; 301) selon la revendication 1, **caractérisé en ce que**, dans au moins deux parois latérales (6 - 9 ; 106 - 109 ; 206 - 208 ; 306 - 309) des parois (5 ; 105 ; 205 ; 305), se trouvent plusieurs antennes de couplage (K) des antennes de couplage (K).

3. Dispositif d'intégration (1 ; 101 ; 201 ; 301) selon la revendication 1 ou 2, **caractérisé en ce que**, dans toutes les parois latérales (6 - 9 ; 106 - 109 ; 206 - 208 ; 306 - 309), d'une paroi circonférentielle (5 ; 105 ; 205 ; 305), se trouvent plusieurs antennes de couplage (K) des antennes de couplage (K), une des parois latérales (6 - 9 ; 106 - 109 ; 206 - 208 ; 306 - 309) étant plus basse que les autres parois latérales (6 - 9 ; 106 - 109 ; 206 - 208 ; 306 - 309).

4. Dispositif d'intégration (1 ; 101 ; 201 ; 301) selon l'une des revendications précédentes, **caractérisé en ce que** le fond (4 ; 104 ; 204 ; 304) comprend une surface de contact qui est conçue, lorsque le téléphone mobile (118) est inséré dans l'espace de logement (3 ; 103 ; 203 ; 303), pour entrer en contact avec le téléphone mobile (118), la surface de contact formant un niveau de charge (12, 112, 312).

5. Dispositif d'intégration (1 ; 101 ; 201 ; 301) selon la revendication 4, **caractérisé en ce que**
- les antennes de couplage (K) sont disposées dans une portion supérieure (305a) des parois (5 ; 105 ; 205 ; 305), qui se trouve au-dessus du niveau de charge (12, 112, 312) et est directement adjacent à l'espace de logement (3 ; 103 ; 203 ; 303) ou
- les antennes de couplage (K) sont disposées uniquement dans une portion inférieure (305b) des parois (5 ; 105 ; 205 ; 305), qui forme un prolongement de la portion supérieure et en dessous du niveau de charge (12, 112, 312) ou
- les antennes de couplage (K) s'étendent de manière continue au-dessus d'une portion supérieure (305a) des parois (5 ; 105 ; 205 ; 305), qui se trouve au-dessus du niveau de charge (12, 112, 312) et est directement adjacente à l'espace de logement (3 ; 103 ; 203 ; 303) et au-dessus d'une portion inférieure (305b) des parois (5 ; 105 ; 205 ; 305), qui forme un prolongement de la portion supérieure (305a) et qui s'étend en dessous du niveau de charge (12, 112, 312) ou
- une première partie des antennes de couplage (K) s'étendent de manière continue au-dessus d'une portion supérieure (305a) des parois (5 ; 105 ; 205 ; 305), qui se trouve au-dessus du niveau de charge (12, 112, 312) et est directement adjacente à l'espace de logement (3 ; 103 ; 203 ; 303) et qui s'étend au-dessus d'une portion inférieure (305b) des parois (5 ; 105 ; 205 ; 305), qui forme un prolongement de la portion supérieure (305a) et qui s'étend en dessous du niveau de charge (12, 112, 312) et **en ce qu'**une deuxième partie des antennes de couplage (K) est disposée uniquement dans une portion inférieure (305b) des parois (5 ; 105 ; 205 ; 305), qui forme un prolongement de la portion supérieure (305a) et qui s'étend en dessous du niveau de charge (12, 112, 312).

6. Dispositif d'intégration (1 ; 101 ; 201 ; 301) selon l'une des revendications précédentes 4 ou 5, **caractérisé en ce qu'**au moins une partie des antennes de couplage (K) forment avec le niveau de charge (12, 112, 312) un angle (α) entre 70° et 130°.

7. Dispositif d'intégration (1 ; 101 ; 201 ; 301) selon l'une des revendications précédentes 4, 5 ou 6 et console (121) d'un véhicule (117), **caractérisé en ce que** l'espace de logement (3 ; 103 ; 203 ; 303) ou le dispositif de logement (2 ; 102 ; 202 ; 302) formant l'espace de logement (3 ; 103 ; 203 ; 303) est intégré dans la console (121) du véhicule (117) de façon à former une coque (122), dans laquelle le niveau de charge (12, 112, 312) est approximativement horizontal dans l'espace ou **en ce que** l'espace de logement (3 ; 103 ; 203 ; 303) ou le dispositif de logement (2 ; 102 ; 202 ; 302) formant l'espace de logement (3 ; 103 ; 203 ; 303) est intégré dans la console (121) du véhicule (117) de façon à former un puits (224) dans lequel le niveau de charge (12, 112, 312) est oblique ou vertical dans l'espace.

8. Dispositif d'intégration (1 ; 101 ; 201 ; 301) selon l'une des revendications précédentes, **caractérisé en ce que** les antennes de couplage (K) sont conçues comme des antennes de couplage planes (K), qui sont disposées sur un côté interne (225) des parois (5 ; 105 ; 205 ; 305) ou sont disposées dans les parois (5 ; 105 ; 205 ; 305) ou sont disposées sur un côté externe (226) des parois (5 ; 105 ; 205 ; 305).

9. Procédé de fabrication d'un dispositif d'intégration (1 ; 101 ; 201 ; 301) pour un téléphone mobile (118) selon au moins l'une des revendications précédentes, les antennes de couplage (K) étant montées sur les parois (5 ; 105 ; 205 ; 305) et/ou les bobines de charge (10 ; 10a - 10f) sont montées sur le fond (4 ; 104 ; 204 ; 304) du dispositif de logement (2 ; 102 ; 202 ; 302) de façon à ce que les parois (5 ; 105 ; 205 ; 305) et/ou le fond (4 ; 104 ; 204 ; 304) soient usinés pour cela avec un laser au niveau des antennes de couplage (K) prévues et/ou au niveau des bobines de charge (10 ; 10a- 10f) prévues, les parois (5 ; 105 ; 205 ; 305) et/ou le fond (4 ; 104 ; 204 ; 304) étant constitués d'une matière plastique adaptée à un procédé de structuration au laser et en ce que, dans une étape suivante, une métallisation chimique des zones usinées soit effectuée puis un traitement de surface des parois (5 ; 105 ; 205 ; 305) et/ou du fond (4 ; 104 ; 204 ; 304) du dispositif de logement (2 ; 102 ; 202 ; 302) soit effectué, plus particulièrement par flocage.
